# EUROPEAN PATENT APPLICATION

(11) **EP 1 693 866 A1**
(43) Date of publication of application: **23.08.2006**
(21) Application number: 04820265.9
(22) Date of filing: 09.12.2004
(51) Int. Cl.: H01G 9/058, H01G 9/155

(54) **ELECTRICITY STORAGE DEVICE AND PROCESS FOR PRODUCING THE SAME**

(30) Priority: 10.12.2003 JP 2003411288
(71) Applicant: Eamex Corporation, Suita-shi, Osaka 564-0062 (JP)
(72) Inventor: SUGIYAMA, Minoru, c/o Eamex Corporation, Suita-shi, Osaka 564-0062 (JP); KATO, Kenji, c/o Eamex Corporation, Suita-shi, Osaka 564-0062 (JP); ONISHI, Kazuo, c/o Eamex Corporation, Suita-shi, Osaka 564-0062 (JP); SEWA, Shingo, c/o Eamex Corporation, Suita-shi, Osaka 564-0062 (JP)
(74) Representative: Luderschmidt, Schüler & Partner
(86) International application number: PCT/JP2004/018384
(87) International publication number: WO 2005/057597

(57) **Abstract**

There are provided an electricity storage device, comprising a polymer electrolyte and polarizable electrodes,
the polarizable electrodes each comprising an interface with the polymer electrolyte, the polarizable electrodes being metal electrodes, a negative electrode of the polarizable electrodes having,
at its interface with the polymer electrolyte, a lithium alloy with a metal component contained in the negative electrode, the lithium alloy being capable of releasing lithium ions through a reversible electrochemical oxidation-reduction reaction; and a method for producing an electricity storage device, comprising: a structure forming step of obtaining an electrode-electrolyte structure where each of the polarizable electrodes is formed on a polymer electrolyte through an electroless plating method; and a layer forming step of applying voltage to the polarizable electrode while the electrode-electrolyte structure obtained by the structure forming step includes a solution containing lithium ions, to form a layer containing lithium and a metal component of the polarizable electrodes at the negative electrode of the polarizable electrodes.

## Description

### TECHNICAL FIELD

The present invention relates to an electricity storage device in which polarizable electrodes are formed on a polymer electrolyte, and a method (process) for producing an electricity storage device.

### RELATED ART

An electricity storage device is called a condenser or a capacitor, being a device or a circuit device for storing a charge between electrodes. In recent years, the capacitor is receiving attention for being usable in such applications as a power source for backing up memories of personal computers, portable terminals and the like, as a power source coping with instantaneous power failure, and as a solar power generation energy storage system in combination with a solar cell.

A metal electrode and a carbon electrode are primarily electrodes to be used in the capacitor (condenser). The carbon electrode is an electrode made of a carbon material such as activated carbon, and is suitably used for increasing a capacity due to its large specific surface area. However, since a powdered carbon material is to be kneaded, it is necessary to handle a fine particle, making material handling difficult and usability insufficient. Further, when the electrode is made of the carbon material, a collector such as a metal meshed body or a metal plate needs to be provided as the electrode. Moreover, in order to produce a capacitor without the collector, the capacitor is restricted to the shape of a button or the like. Such restriction reduces a degree of freedom in designing the shape of the capacitor, thereby preventing formation of the capacitor in desired shape according to each application. Furthermore, when the collector is used for every electrode made of the carbon material, the capacitor has a thickness increased by the thickness of the collector, thereby preventing reduction in capacitor thickness. Accordingly, the electrode of the capacitor is preferably the metal electrode not requiring the collector.

As the capacitor using the metal electrode, there is a thin polymer film capacitor in which electrodes are formed on a polymer layer (e.g. Japanese Patent Application Laid-Open No. 11-008153). The polymer film capacitor has a capacitance of 0.015 to 0.02 µF in an area of 1 cm² and a thickness of 0.35 to 0.41 µm, and a capacitance of 25 to 40 µF in an area of 1 cm² and a thickness of 0.8 to 1.8 µm. Those capacitances are not sufficient and need further improvement.

### DISCLOSURE OF THE INVENTION

### Problems to be solved by the Invention

It is an object of the present invention to provide a large-capacity electricity storage device whose electrodes are metal electrodes and which has a large specific capacity as well as a high energy density.

### Means for solving the Problems

The inventors found the following as a result of industrious efforts on their studies, to achieve the present invention. An electricity storage device, whose polarizable electrodes are metal electrodes and which has a large specific capacity, can be applied by use of an electricity storage comprising a polymer electrolyte and polarizable electrodes, the polarizable electrodes each comprising an interface with the polymer electrolyte, the polarizable electrodes being metal electrodes, a negative electrode of the polarizable electrodes having, at its interface with the polymer electrolyte, a lithium alloy with a metal component contained in the negative electrode, the lithium alloy being capable of releasing lithium ions through a reversible electrochemical oxidation-reduction reaction.

Moreover, the present invention is a method for producing an electricity storage device, comprising: a structure forming step of forming an electrode-electrolyte structure having polarizable electrodes each on a polymer electrolyte through an electroless plating method; and a layer forming step of applying voltage to the polarizable electrodes while the electrode-electrolyte structure obtained by the structure forming step includes a solution containing lithium ions, to form a layer containing lithium and the metal component of the polarizable electrodes at the negative electrode of the polarizable electrodes. The use of the above production method can facilitate production of a capacitor, in which the metal electrode as the negative electrode of the polarizable electrodes has a lithium alloy with a metal component constituting the metal electrode at its interface with the polymer electrolyte.

### Effect of the Invention

Since the electricity storage device of the present invention comprises the metal electrodes as the polarizable electrodes, and further comprises the lithium alloy at the interface between the negative electrode and the polymer electrolyte, electric double layers are formed at the interface between the metal electrode and the polymer electrolyte, followed by occurrence of an oxidation-reduction reaction of the lithium alloy. Therefore, since a specific capacity value of the electricity storage device is a capacity value as the sum of a capacity of the electric double layers and a pseud-capacity through a redox reaction, the specific capacity is larger than a capacity value of a normal electric double-layered capacitor and that of a redox-capacitor.

Further, the method for producing an electricity storage device according to the present invention enables easy formation of a layer capable of releasing lithium ions through the redox reaction at the interface between the metal electrode as the negative electrode of the polarizable electrodes and the polymer electrolyte. This can facilitate production of an electricity storage device having a specific capacity larger than a capacity of the normal electric double-layered capacitor.

### BRIEF DESCRIPTION OF THE DRAWINGS

Fig. 1 is an SEM photograph taken for observation of a cross section of an electrode-electrolyte structure in a thickness direction as one mode of the electrode-electrolyte structure for use in an electricity storage device of the present invention.
Fig. 2 is an SEM photograph taken for observation of a cross section of an electrode-electrolyte structure in a thickness direction as one mode of the electrode-electrolyte structure for use in an electricity storage device of the present invention.

### BEST MODE FOR CARRYING OUT THE INVENTION

### (Electricity storage device)

The present invention is an electricity storage device comprising a polymer electrolyte and polarizable electrodes, the polarizable electrodes each comprising an interface with the polymer electrolyte, the polarizable electrodes being metal electrodes, a negative electrode of the polarizable electrodes having, at its interface with the polymer electrolyte, a lithium alloy with a metal component contained in the negative electrode, the lithium alloy being capable of releasing lithium ions through a reversible electrochemical oxidation-reduction reaction.

The electricity storage device of the present invention has an interface between the polarizable electrode and the polymer electrolyte. Hence the electricity storage device is capable of forming electric double layers by means of ion species contained in the polymer electrolyte ions at the time of storing electricity.

Further, the electricity storage device of the present invention has a lithium alloy with a metal component contained in the negative electrode of the polarizable electrodes at an interface between the polarizable electrode as the negative electrode and the polymer electrolyte. The lithium alloy is an alloy capable of reversibly releasing lithium ions through an electrochemical oxidation-reduction reaction. The lithium alloy is capable of releasing lithium ions to cause an oxidation-reduction reaction ions at the time of discharging. Therefore, in addition to the capacity of the electric double layers, the electricity storage device also has a capacity that occurs through an oxidation-reduction reaction. Namely, the electricity storage device of the present invention has a larger capacity than an electric double-layered capacitor having a capacity that occurs due only to the electric double layers and than a redox capacitor having a capacity that occurs only through the oxidation-reduction reaction.

The lithium alloy may be an alloy capable of releasing lithium ions at the time of discharging, and formed of lithium ions and a metal component contained in the negative electrode at the time of charging. The metal which forms the lithium alloy with lithium is not particularly restricted, but preferably a metal selected from the group consisting of gold(Au), lead(Pb), tin(Sn), zinc(Zn), indium(In), cadmium(Cd), bismuth(Bi), titanium(Ti), antimony(Sb), copper(Cu), silver(Ag), iron(Fe), and nickel(Ni), since those metals are easy to obtain and form an alloy with lithium. Namely, the negative electrode of the electricity storage device of the present invention preferably contains as the metal component one or more metals selected from the group consisting of gold, lead, tin and zinc. In addition, since the metal that forms the lithium alloy with lithium is a metal contained in the polarizable electrodes, it is possible to easily form the lithium alloy at an interface between the negative electrode and the polymer electrolyte at the time of charging the electricity storage device after repeated charging/discharging. This can make the electricity storage device resistant to decrease in capacity even in repeated charging/discharging

The electricity storage device of the present invention comprises polarizable electrodes. As described above, the negative electrode of the polarizable electrodes has an alloy of lithium and a metal contained in the negative electrode at the interface between the negative electrode and the polymer electrolyte. The number of metal species that form the lithium alloy with lithium may be one or more than one so long as the lithium alloy can be formed.

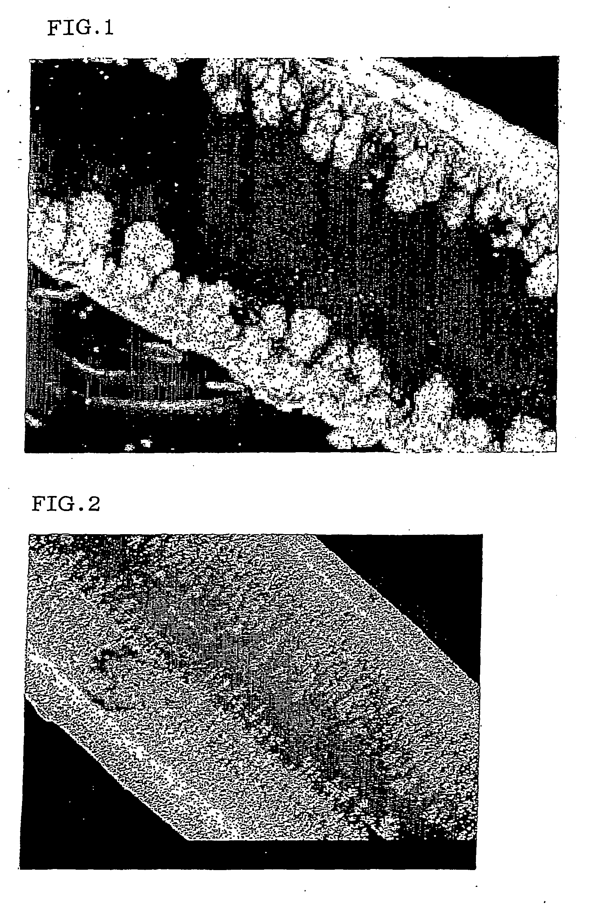

Since the metal component contained in the negative electrode enables formation of the lithium alloy in large amount at the interface between the negative electrode and the polymer electrolyte, the lithium alloy is preferably composed of the metal alone which forms the lithium alloy with lithium. Since a larger amount of lithium alloy can be formed at the negative electrode due to a broad interface between the negative electrode and the polymer electrolyte, it is preferable that the interface between the negative electrode and the polymer electrolyte be formed in concave-convex shape. It is also preferable that the electricity storage device have, in a boundary region with the polymer electrolyte in a cross section of the electricity storage device in the thickness direction, a projecting part which is in contact with the polymer electrolyte and constitutes the electrode component of the negative electrode. The border line of the projecting part may be a substantially cyclical curve or in indefinite shape. The projecting part may be in the shape of fractal, peninsula, island with a neck-shaped constriction, tree, mushroom, icicle, polyp, and/or coral. It is to be noted that the island-shaped part may be substantially circular, substantially oval, or polygonal. Further, the boundary region is a range between a position closest to the center of the electricity storage device in the thickness direction at the interface between the negative electrode and the polymer electrolyte, and a position closest to the surface of the negative electrode at the interface, as well as a range including the interface between the negative electrode and the polymer electrolyte, in a cross section of the electricity storage device in the thickness direction. The electrode-electrolyte structure having the projecting part in the cross section in the thickness direction can be obtained with the polymer electrolyte by the electroless plating method. For example, a projecting part as shown in an electron photomicrograph of Fig. 1 or 2 can be formed. It should be noted that Figs. 1 and 2 are SEM (scanning electron microscope) photographs, taken such that gold is deposited in high vacuum in the cross section of the electrode-electrolyte structure as the sample and then the cross section of the electrode-electrolyte structure in the thickness direction is magnified 300 times by a scanning electron microscope for observation. In Figs. 1 and 2, white-looking parts are composed of metal.

Further, since the interface between the negative electrode and the polymer electrolyte is wide to allow formation of the lithium alloy in a larger amount at the interface, the negative electrode is preferably porous metal electrode, and more preferably a porous metal electrode composed solely of a metal which forms the lithium alloy with lithium. Formation of the lithium alloy in a larger amount at the interface between the negative electrode and the polymer electrolyte enables the electricity storage device of the present invention to have a large specific capacity. For example, the polymer electrolyte can be subjected to an adsorption-reduction method in the electroless plating method, to obtain the porous metal electrode.

Moreover, the electricity storage device comprises the positive electrode having an interface with the polymer electrolyte. The positive electrode is a metal electrode capable of forming electric double layers at its interface with the polymer electrolyte. Hence, the electricity storage device of the present invention is capable of forming electric double layers at the positive electrode. As thus described, in the electricity storage device of the present invention, the reaction mainly occurs which forms the lithium alloy at the negative electrode, while the electric double layers are formed at the positive electrode, to perform charging/discharging. Although the electricity storage device may contain a substance which absorbs lithium ions also at the positive electrode, the positive electrode is preferably a metal electrode containing no substance which absorbs lithium ions for facilitating production of the positive electrode. It should be noted that the electricity storage device of the present invention can form electric double layers, also at the negative electrode.

Although the positive electrode may be a metal electrode capable of forming the electric double layers, it is preferably made of the same material as the material of the negative electrode to facilitate its production. Namely, the positive electrode is preferably a metal electrode containing as a metal component one or more metals selected from the group consisting of gold, lead, tin and zinc, and preferably has the same composition of the metal components as that of the negative electrode. Moreover, since no gas infiltrates the interface between the positive electrode and the polymer electrolyte, the positive electrode is preferably an electrode bonded to the polymer electrolyte. It should be noted that the negative electrode is also preferably an electrode bonded to the polymer electrolyte.

Although the polymer electrolyte contained in the electricity storage device of the present invention is not particularly restricted so long as being an electrolyte primarily formed of a polymer, an ion exchange resin is preferred for sufficient adsorption of a gold complex. In addition, the ion exchange resin is preferably contained as the resin component of the polymer electrolyte since, with the ion exchange resin contained, the polymer electrolyte even in a swollen state functions as the electrolyte of the electricity storage device without containing a large amount of solvent molecules, and a larger capacitance can further be obtained than that of a conventional electricity storage device. The ion exchange resin is not particularly restricted, and known resins can be used. Those resins can also be used which are obtained by introduction of a hydrophilic functional group such as a sulfonic acid group or a carboxyl group to polyethylene, polystyrene, a fluorocarbon resin, or the like. Specific examples of the ion exchange resin used include a perfluorocarbonic acid resin and a perfluorosulfonic acid resin. For example, Nation resin (perfluorosulfonic acid resin, manufactured by E.I. Du Pont de Nemours & Co. Inc.) and Flemion (perfluorocarbonic acid resin or perfluorosulfonic acid resin, manufactured by Asahi Glass CO.,Ltd.) can be employed. Since the ion exchange resin has a broad degree of freedom in selecting ionic species of electrolyte salt to allow extension of the range of combinations according to applications and characteristics, the ion exchange resin is preferably a cation exchange resin. It is to be noted that as the polymer electrolyte, a polymer electrolyte molded article suitable for the shape of the electricity storage device obtained by the electroless plating method can be used in desired shape such as the shape of film, plate, cylinder, column or tube.

The electricity storage device of the present invention is in a state where the polymer electrolyte layer is swollen due to an ion-containing solvent. The solvent may be a non-aqueous solvent or an aqueous solvent. Further, the electricity storage device may be in a state where some amount of solvent molecules of the electrolyte solution are contained in the polymer electrolyte.

When the electricity storage device of the present invention is in a state where the polymer electrolyte is swollen due to the ion-containing solvent, lithium ions can be suitably used since they are capable of forming a lithium alloy at the negative electrode. It is to be noted that another cations may also be contained so long as the ions neither inhibit oxidation-reduction reaction of the lithium alloy at the negative electrode nor decrease the specific capacity of the electricity storage device. In the electricity storage device of the present invention, the concentration of lithium ions in the polymer electrolyte is not particularly restricted, but is preferably from 0.1 to 3.3 mol/L.

Anions contained in the polymer electrolyte in the electricity storage device of the present invention is not particularly restricted, and anions contained in a known electrolyte can be employed. However, as the anions contained in the polymer electrolyte, one or more species of anions, which are selected from the group consisting of BF₄⁻, PF₆⁻, ClO₄⁻, Ts⁻, SO₄²⁻, NO₃⁻, Cl⁻, Br⁻, I⁻, CF₃SO₄⁻, C₄F₉SO₄⁻, perfluoroalkylsulfonylimide ion, BCH₃(C₂H₅)₃⁻, B(C₂H₅)₄⁻, B(C₄H₉)₄⁻, AsF- and SbF₆⁻, are suitably used. As the above-mentioned anions, ClO₄⁻ and (CF₃SO₂)₂N⁻ are preferred, and (CF₃SO₂)₂N⁻ is particularly preferred. Further, an ionic liquid (room temperature molten salt) containing Li(CF₃SO₂)₂N can be used as the ion-containing solution. It should be noted that in the electricity storage device, there may be a difference in kind between the solvent contained in the electrode-electrolyte structure at the time of forming the lithium alloy at the negative electrode and the solvent contained in the electrode-electrolyte structure at the time of using the electricity storage device. However, it is preferable to contain lithium ions in the polymer electrolyte of the electricity storage device.

Water can be used as the solvent contained in the polymer electrolyte of the electricity storage device of the present invention. When water is used as the solvent, it is preferable to use a noble metal as the metal component of the polarizable electrodes in order to prevent ionization of the metal in the capacitor charging/discharging process. Meanwhile, an aprotic polar organic solvent can also be used as the above-mentioned solvent. When a non-aqueous polar organic solvent having a high dielectric constant and a high decomposition voltage is used, the water becomes resistant to electrolysation and electrochemically stable, thereby the higher withstand voltage and energy density of the water increase. Moreover, the use of the polar organic solvent as the solvent contained in the polymer electrolyte allows the use of a metal other than a noble metal as the electrode, which is also advantageous in terms of cost. In particular, the polar organic solvent is preferably the aprotic polar solvent for preventing decomposition of the polar organic solvent. Specific examples of the polar organic solvent include propylene carbonate, N-methylpyrrolidone, dimethyl sulfoxide, acetonitrile, N,N-dimethylformamide, N-methylformamide, tetrahydrofuran, phosphoric hexamethyltriamide, γ-butyrolactone, 1,2-dimethoxyethane, N-methylacetamide, sulfolane-ethylene carbonate, glutaronitrile, adiponitrile, nitromethane, nitroehane, and pyridine. Preferably used are propylene carbonate, N-methylpyrrolidone, dimethyl sulfoxide, N-methylformamide and γ-butyrolactone. Further preferably used are propylene carbonate, N-methylformamide, γ-butyrolactone and 1,4-dioxolane. Propylene carbonate is particularly preferably used. It should be noted that in the electricity storage device, there may be difference in kind between the solvent included in the electrode-electrolyte structure at the time of forming the lithium alloy at the negative electrode and the solvent at the time of using the electricity storage device.

In the electricity storage device of the present invention, the metal electrodes are used as the positive electrode and the negative electrode. As thus described, the electricity storage device has a specific capacity as the sum of the electric double-layer capacity that occurs due to the electric double layers formed at the electrode interface and the pseudo-capacity that occurs through the oxidation-reduction reaction. Hence the capacity of the electricity storage device can be larger than that of a conventional capacitor using metal electrodes. The specific capacity of the electricity storage device can be not smaller than 20F/cm³. It is to be noted that the specific capacity is a numeric value measured by a constant current discharge method, as well as a value measured in conformity to the EIAJ (Electronic Industries Association of Japan) Standard No. EIAJ RC-2377, issued by EIAJ (established in April, 2000, Test method for electric double-layer capacitor, 3.3.1, Constant current discharge method).

### (Production method)

Further, the present invention is a method for producing an electricity storage device, comprising: a structure forming step of obtaining an electrode-electrolyte structure where each of the polarizable electrode is formed on a polymer electrolyte through the electroless plating method; and a layer forming step of applying voltage to the polarizable electrode while the electrode-electrolyte structure obtained by the structure forming step includes a solution containing lithium ions, to form a layer containing lithium and a metal component of the polarizable electrodes at the negative electrode of the polarizable electrodes. The use of the method for producing the electricity storage device according to the present invention enables formation of an electricity storage device having a layer which contains lithium and the metal component contained in the negative electrode as the metal electrode at the interface between the negative electrode and the polymer electrolyte. Since the alloy, which is capable of releasing lithium ions through a reversible electrochemical oxidation-reduction reaction, can be contained in the above-mentioned layer, the electricity storage device has both the electric double-layer capacity and the pseudo-capacity that occurs through the oxidation-reduction reaction, thereby having a larger specific capacity than that of the conventional capacitor.

In the production method of the present invention, first, in the structure forming step, an electrode-electrolyte structure comprising polarizable electrodes on the polymer electrolyte is formed by the electroless plating method. The electrode-electrolyte structure includes the polymer electrolyte and the polarizable electrodes as the metal electrodes. Each of the polarizable electrodes has an interface with the polymer electrolyte. In the structure forming step, the use of the electroless plating method can facilitate formation of a pair of polarizable electrodes on the polymer electrolyte.

Although the electroless plating method is not particularly restricted, it is preferably a method comprising: an adsorbing step of making an ion exchange resin adsorb a metal complex; and a reducing step of bringing a reductant solution into contact with the ion exchange resin, to which the metal complex was adsorbed by the adsorbing step, to deposit a metal. This electroless plating method is a method referred to as an adsorption-reduction method. Since the obtained electrode-electrolyte structure is the electrode-electrolyte assembly, the polarizable electrodes are resistant to separation from the polymer electrolyte, thereby to facilitate formation of the electrode-electrolyte structure having a wide interface between the polarizable electrode and the polymer electrolyte and a favorably high mechanical strength. Further, the adsorption-reduction method can further widen the interface between the polarizable electrode and the polymer electrolyte since the obtained polarizable electrodes are porous metal electrodes. Moreover, the adsorption-reduction method can make the interface between the obtained polarizable electrode and the polymer electrolyte concavoconvex. As described in the foregoing paragraph on (electricity storage device), according to the adsorption-reduction method, it is possible to form the electrode-electrolyte structure having a projecting part which is in contact with the polymer electrolyte in the cross section of the electricity storage device in the thickness direction and constitutes the electrode component of the negative electrode in a boundary region with the polymer electrolyte. The electrode-electrolyte structure has a further wider interface between the polarizable electrode and the polymer electrolyte, thereby allowing the electricity storage device to have a larger specific capacity. The border line of the projecting part may be in the shape of a substantially cyclical curve or in indefinite shape. The projecting part may be in the shape of fractal, peninsula, island with a neck-shaped constriction, tree, mushroom, icicle, polyp, and/or coral. It is to be noted that the island-shaped part may be substantially circular, substantially oval, or polygonal. In addition, the boundary region is an area between a position closest to the center of the interface between the negative electrode and the polymer electrolyte in the thickness direction of the electricity storage device and a position closest to the negative electrode surface at the interface, in a cross section of the electricity storage device in the thickness direction, as well as an area including the interface between the negative electrode and the polymer electrolyte.

There is a method as the electroless plating method, which comprises: as a pre-step for the electroless plating method of the polymer electrolyte, a swelling step of immersing a good solvent or a mixed solvent including a good solvent into the polymer electrolyte to swell the polymer electrolyte such that the swollen polymer electrolyte has a predetermined shape and has a thickness 120% or more as large as the thickness of the polymer electrolyte in a dried state; an adsorbing step of making the polymer electrolyte adsorb a metal complex, which is performed after completion of the swelling step; and a reducing step of bringing a reductant solution into contact with the polymer electrolyte to which the metal complex was adsorbed. This method is particularly preferred for facilitating deposition of the metal in the polymer electrolyte to enable widening of the interface between the polarizable electrode and the polymer electrolyte. By swelling the polymer electrolyte such that the polymer electrolyte in a swollen state has a thickness 120% or more as large as that of the polymer electrolyte in a dried state, a degree of freedom increases in segment movement of a side chain having a functional group in a resin component forming the polymer electrolyte. It is considered that such an increase in degree of freedom makes the metal complex apt to be adsorbed from the surface to the inside of the polymer electrolyte in the adsorbing step of the electroless plating method, and also makes the reductant in the reductant solution apt to be adsorbed from the surface to the inside of the polymer electrolyte in the reducing step, thereby facilitating brown operations of the metal complex and the reductant in the polymer electrolyte.

The good solvent means a solvent capable of swelling a polymer in a favorable manner, and each solvent differs depending upon the kind of polymer constituting the polymer electrolyte. A plurality of kinds of the good solvents may be mixed for use as the good solvent. Examples of the good solvent include methanol, dimethyl sulfoxide, N-methylpyrrolidone, dimethylformamide, ethylene glycol, diethylene glycol, glycerin, and tetrapropylhydroxide. When the polymer electrolyte is a perfluorocarboic acid resin or a perfluorosulfonic acid resin, methanol, ethanol, propanol, hexafluoro-2-propanol, diethylene glycol or glycerin can be used. Especially in the swelling step, when the polymer electrolyte is the perfluorocarboic acid resin or the perfluorosulfonic acid resin, it is preferable to immerse methanol or a solvent containing methanol for swelling the polymer electrolyte such that the polymer electrolyte in a swollen state has a thickness 120% or more as large as that of the polymer electrolyte in a dried state. The reason for such use of methanol is that methanol is apt to swell and easily handled, thus having good usability.

In the adsorption-reduction method, when the reducing step is performed after completion of the swelling step, as mentioned above, the metal complex is contained into the polymer electrolyte. The contained polymer electrolyte is then transformed into particulate metal by the reducing step, and particles of the particulate metal are linked to each other so that the metal electrode is formed in the electrolyte. Since the metal electrode is formed on the polymer electrolyte in the above-mentioned manner in the electricity storage device of the present invention, the interface between the metal electrode and the electrolyte layer is not necessarily definite. The polymer electrolyte can be configured such that the metal component is rich in a region in the vicinity of the outer side of the polymer electrolyte and the electrolyte component gradually becomes rich as getting closer to the center of the electrolyte. Namely, the metal electrode in the electricity storage device of the present invention is not necessarily a definite metal electrode present as a layer on the electrolyte. The metal electrode is sufficient when being usable as the electrode and having a portion with a good current-carrying property by at least linkage between metals present in the vicinity of the outer side of the electrolyte. Therefore, the electricity storage device of the present invention can be configured such that the metal electrode layer and the electrolyte layer do not have a definite interface by visual inspection, and the electrolyte portion having a resistance value as the electrolyte layer contains metal as a main component and is sandwiched between the portions having the good current-carrying property which are usable as electrodes.

In the method for producing an electricity storage device according to the present invention, when the adsorption-reduction method is used as the electroless plating method, the adsorbing step and the reducing step can be repeatedly performed so as to bring the shape of the interface between the polarizable electrode and the polymer electrolyte into a desired state. For example, the surface of the polymer electrolyte is roughened by sandblasting or the like, and the polymer electrolyte with the roughened surface is subjected to the cleaning step, which is then subjected to the swelling step, followed by the first round of adsorbing step and the reducing step. Thereafter, a set of the cleaning step, the adsorbing step and the swelling step may be repeated a plurality of times.

The adsorbing step is not particularly restricted so long as the metal complex is adsorbed to the polymer electrolyte, and it is possible to perform the adsorbing step that is performed in the known adsorption-reduction method in the electroless plating method. Although the metal complex to be used in the adsorbing step is not particularly restricted so long as being a metal species usable as the electrode, the metal complex preferably contains as a main metal one or more metals selected from the group consisting of gold, lead, tin and zinc, since those metals are easy to obtain and form an alloy with lithium. Further, the metal complex is preferably a complex of gold(Au), lead(Pb), tin(Sn), zinc(Zn), indium(In), cadmium(Cd), bismuth(Bi), titanium(Ti), antimony(Sb), copper(Cu), silver(Ag), iron(Fe), or nickel(Ni). The metal complex is more preferably a complex with gold, nickel or iron since the main metal can be readily reduced in those complexes.

The reducing step is not particularly restricted so long as being capable of reducing the metal complex adsorbed to the polymer electrolyte, and a known reducing step in the electroless plating method can be performed. Further, the known adsorption-reduction method in the electroless plating method can be performed in the cleaning step as well as a pre-step of roughing the polymer electrolyte surface.

In the production method of the electricity storage device of the present invention, after completion of the structure forming step, the electrode-electrolyte structure obtained by the electroless plating method is subjected to the layer forming step where voltage is applied to the polarizable electrode to form a layer containing lithium and a metal component of the polarizable electrode at the interface between the polarizable electrode and the polymer electrolyte at the negative electrode. Since containing an alloy of the metal component of the negative electrode and lithium, the above-mentioned layer is capable of releasing lithium through electrochemical oxidation/reduction so that the negative electrode can function in the same manner as a negative electrode active material of a lithium secondary battery. Therefore, since the lithium alloy releases lithium ions at the time of discharging and the lithium alloy is formed at the negative electrode interface at the time of charging in the electricity storage device due to formation of the layer at the interface part between the negative electrode and the polymer electrolyte, the electricity storage device can have a pseudo-capacity in addition to an electric double-layered capacity. In addition, the layer is formed as the outermost layer of the negative electrode, but there are some cases where the layer is formed in appearance inside the negative electrode when the negative electrode is a porous electrode. Further, in the layer forming step, the layer containing lithium is formed at the negative electrode and thereafter the electrode-electrolyte structure is immersed into a lithium solution with a different concentration or of a different kind from that of the lithium solution used in the layer forming step, so as to replace the solution included in the electrode-electrolyte structure.

Since the electricity storage device produced by the method for producing an electricity storage device described above has the layer capable of releasing lithium ions through the electrochemical oxidation-reduction reaction at the negative electrode, the electricity storage device can have a pseudo-capacity in addition to the electric double-layer capacity, thus having a larger specific capacity than a capacity of the conventional electric double-layered electricity storage device. The electricity storage device therefore has a large specific capacity and a high energy density.

### (Structure of electricity storage device)

The electricity storage device of the present invention can be assembled in the following manner. An electricity storage device comprises a polymer electrolyte and two polarizable electrodes formed by sandwiching the polymer electrolyte. The electricity storage device is laminated, folded or wound, to be formed in coin shape or laminate shape. This formed electricity storage device is housed into a container such as a can or a laminate pack. The container can be assembled as an electricity storage component by a can-sealing method in the case of using the can as the container or by a method of heat sealing in the case of using the laminate pack as the laminate pack as the container. Further, in the above method, the container can be filled with a specific electrolyte solution prior to the can sealing or heat sealing of the container, to obtain the electricity storage component. The electricity storage device of the present invention is housed into a bottomed cylindrical exterior case, and the open end part of the exterior case is sealed with a sealing made of an elastic member, thereby to obtain an electricity storage component as a chip component. The case housing the electricity storage device of the present invention may be filled with an insulating material having a small linear expansion coefficient.

The electricity storage device of the present invention may be any one of devices of the types described as follows: a coin-type device which is sealed with a metal cover via a gasket; a wound type device which is sealed by housing a device, wound between the positive electrode and the negative electrode via a separator, into a metal case along with the electrolyte solution; and a laminate-type device where a device laminate is incorporated, which was formed by laminating the devices between the electrodes as the positive electrode and the negative electrode via a separator. When the laminate-type device is adopted, the electricity storage devices may be laminated with each anode placed upon one another and each cathode placed upon one another.

The electricity storage device of the present invention can be a laminated solid electrolytic capacitor of a large-sized flat plate. Further, in the electricity storage device of the present invention, the metal electrode can be a U-shaped or tubular metal electrode. The tubular metal electrode can be in the shape of a circular tube, a triangular tube, a square tube, a rectangular tube, or a polygonal tube. As for the electricity storage device of the present invention, the shape of the electricity storage device itself is arbitral, and when the shape has an angular part, a bending surface can be formed with a predetermined curvature at the angular part in order to prevent damage or current leakage failure due to distortion caused by thermal stress, mechanical stress or a heat expansion difference from a resin exterior casing.

Moreover, the electricity storage device of the present invention can be an electrode laminated electricity storage component or an oval cross-sectional wound electricity storage component. In the case of winding the electricity storage device, a vinylon nonwoven fabric mainly composed of a vinylon fiber can be used as a separator and the electricity storage device wound via the separator can be used as a wound electricity storage component. In the wound electricity storage component, an insulating protection layer may be provided on the peripheral face of the wound electricity storage device. In the electricity storage device having a wound configuration, since a linear body continuously intervenes in a meandering state in the winding length direction of the electricity storage device, the linear body can also be used as a lead. It should be noted that in the case of using the electricity storage device of the present invention as the wound electricity storage device, a tape for fixing the winding end can be made shorter than the periphery of the capacitor device.

The electricity storage device of the present invention may be configured such that a plurality of electricity storage devices are aligned as one component and integrally packaged to be formed in array shape. In addition, in the electricity storage device, an electrode having a grid-like pattern is formed on a single sheet-like solid electrolyte to obtain an electricity storage device at each square of the grid. The surface of each of cathode layers and a cathode lead frame may be bonded to a metal wire using a wire bonder. Or, a metal foil piece may be bonded to at least part of the surface of each of the cathode layers, and thereafter the surface of the metal foil piece may be bonded to the cathode lead frame with the metal wire using the wire bonder.

In the button-shaped electricity storage component, the bottom part of the metal container is bonded to the top cover part thereof to be sealed with use of an insulating ring gasket, so that the electricity storage device can be put into the metal container.

After covering the surface of the electricity storage device with a resin, the electricity storage device may be inserted into a bottomed cylindrical aluminum case, and the opening of the case may be rubber-sealed by drawing, which is then subjected to aging to form an electricity storage component. It is to be noted that sealing power can be appropriately improved by improvement in physical properties of the sealing member. In addition, the sealing member may be formed to have a double-layer configuration of a first layer which is arranged on the electricity storage device side and made of an elastic material not allowing, or resisting, transmission of a hydrogen gas therethrough, and a second layer which is arranged on the outer surface of the electrolytic capacitor and made of a material through which the hydrogen gas is more apt to transmit than through the first layer. At the time of housing the electricity storage device into the case, a pressure grooves may be formed on the peripheral face of the case so as to sandwich the first layer of the sealing member from above and below, to seal the opening. Further, the electricity storage device may be configured such that the first case is housed into the second case and the opening of the second case is sealed with an elastic member such as a rubber and a lead terminal of the electricity storage device is allowed to pass through the elastic sealing member to be pulled out to the outside.

In the electricity storage device of the present invention, at least two electricity storage devices, each comprising a solid electrolyte and two metal electrodes formed by sandwiching the solid electrolyte, are laminated. The electricity storage device may be configured to cover the laminate of the electricity storage devices with an insulating exterior resin such that part of an anode terminals connected to the electrode layer as the anode of the electricity storage device and a cathode terminal connected to the electrode layer as the cathode via a conductive adhesive agent are exposed to the outer surface. The exterior resin may be used as the exterior case by thermal curing of a thermosetting resin such as an epoxy resin. The laminated electricity storage component is preferably processed in such a manner that edges of the lead frame are cut off, namely the edge parts are partially ground into flat shape or round shape, so as to alleviate concentration of stress of the device around the edge parts. Moreover, the lead frame outside the exterior resin may be bent along the exterior resin to be used as the external lead so as to give the laminated electricity storage component. Moreover, as for the exterior resin, the anode lead face on the anode lead wire side and the face opposed to the anode lead face may be ground.

Further, in the case of forming the exterior of the electricity storage device, a configuration may be applied in which the resin is filled to form an exterior resin part in pyramid or circular cone shape at the cathode lead part using a mold and the exterior resin part is then broken and removed to expose the electrode of the electricity storage device.

As the method for forming the exterior resin, generally, an epoxy thermosetting resin can be used to form the exterior resin by dip molding (lead-wire type) or mold molding (chip type).

In addition, the side face of the electricity storage device may be covered with the resin. When the solid electrolyte layer is projecting more than the electrodes, the projecting part may be buried using a thermoplastic resin. Further, the electricity storage device of the present invention can be provided with an insulating resin layer on the surface of a thin part of the solid electrolyte layer since the provision of such a layer improves withstand voltage of the corner parts, edge line parts and the like.

In the configuration of the electricity storage component, the electrode terminal can be connected to the top of the metal electrode. A typical example of the method for connecting the electrode terminal to the metal electrode is a method of using a conductive adhesive agent including a carbon paste and/or a silver paste to allow passage of a current. Further, in connecting the electrode terminal, the carbon paste, the silver paste or a metal member may be intervened for connecting the metal layer with the electrode terminal. Moreover, the electricity storage component is capable of controlling an electrochemical reaction caused by control of potential difference between the terminal and the electrode or a potential difference current by provision of a cover layer on the surface of the metal electrode, provision of an electrochemical oxide film layer on the electrode terminal (electrode tab part), or provision of prescribed ceramic or insulating resin layer (epoxy resin, polyamide, polyimide, polyethylene, polypropylene, etc.) on the surface of the electrode terminal made of metal such as aluminum. In addition, the electrode terminal can be processed with a mixture of a solvent and a specific organic compound such as polypyrrole or styrenesulfonic acid to allow reduction in leaked current. Further, instead of provision of the electrode terminal, a foil of metal such as copper may be attached to form a current collecting part to which the lead may be connected. It should be noted that the electrode terminal may repeatedly comprise bending strength. The electrode terminal may be wire-shaped or flat. It should be noted that an impurity in the oxide film layer (defect of the oxide film layer) is preferably reduced for preventing current leakage. Moreover, in the application requiring mechanical strength, such as terminal strength, which is sufficient for device mounting, a nickel-based metal (42 alloy, etc.) has been used. The anode terminal as the electrode terminal may be formed with a groove in the shape of substantially V-block so as to be joined to the anode pole from the direction orthogonal to an axis line of the anode pole.

It is also possible to use a tab terminal for an electricity storage device, comprising: a flat part on which the electricity storage device is mounted; a round bar part continuing to the flat part; and a lead wire to be fixed to the round bar part via a welding part.

In the electricity storage component, a metal foil may further be set on the metal electrode to provide a leader electrode part. The leader electrode parts may be piled to form a multi-layer part, which may be connected with a lead part. Moreover, the surface of the metal foil roughened by etching process can be made to adhere to the metal surface.

Further, an electrode lead pin may be formed at one end of the metal electrode. The erection end of the metal electrode can be formed to comprise a curved face bowed in roof shape or an articulated face. The erection end of the electrode lead pin is bowed in roof shape which is selected from pyramid, circular cone, dome, semicircular, gable and hip roof shapes. The lead pin can be erected on the top or edge part of the roof shape. When the erected electrode lead pin or the electrode lead wire is provided with a plate for preventing the solid electrolyte from crawling up, the crawling-up prevention plate may be allowed to pass through the electrode lead pin or the electrode lead wire such that the projecting part of the plate is brought into contact with the face of the electricity storage device.

One end of the L-shaped leg part of the anode terminal is further bent toward the outside of the L-shape to be welded to the anode lead pin so that the inner face of the L-shaped leg part of the anode terminal can be brought into intimate contact with the exterior resin layer.

When the electricity storage component is to be a chip-type component, an external anode terminal is welded to the lead connected to the electrode terminal or the multi-layer part, and after the device has been packaged by transfer molding using an epoxy resin, portions of the external terminals of both the anode and the cathode projecting from the external terminal are bent along the exterior resin and then shaped to form a chip-type electricity storage component. Moreover, on the cathode lead face in the exterior resin layer where part of the electrode terminal of the cathode is exposed to the outside, a surface conductor layer may be formed, and either or both of a voltage application process (aging process) at high temperature and a heating process in the high temperature atmosphere may be performed, whereafter the surface conductor layer may be removed.

In the electricity storage of the present invention, an external electrode may be formed which comprises a metal layer directly formed on the surface of the exterior resin covering the electricity storage device, and is electrically connected with the anode electrode and the cathode electrode of the electricity storage device. It is to be noted that the external electrode may be formed by providing a base metal layer including an electroless plated metal layer in an external electrode forming part including exposing parts of an anode lead wire and/or a cathode lead layer at the exterior resin. It should be noted that the connecting part may be subjected to the electroless plating for connecting the lead wire to the external electrode or the electrode terminal.

The external anode terminal may be formed in the following manner. After the external anode lead frame has been welded to the anode lead erected at the anode, the anode lead face including the welding point is molded to form an insulating member. The external cathode lead frame led out from the insulating member is then cut off and bent along the insulating member.

Further, the cathode terminal and the anode terminal may be provided in the following manner. The cathode terminal plate having a U-shaped cross section is joined to the bottom face and the side face of the cathode pulling layer to form a resin external casing on the peripheral face of the electricity storage device from which the cathode terminal plate was removed, while the anode terminal plate is laid on the resin exterior casing so as to be opposed to the cathode terminal plate on the cathode lead pulling side.

As for the electricity storage component using the electricity storage device of the present invention, a mold-releasing agent may be applied on the anode lead, and after application of the mold-releasing agent on the exposing face of the cathode terminal plate, the electricity storage device may be immersed into the resin solution. The electricity storage device may be taken out of the resin solution and the solution may then be dried to form the resin exterior casing toward the upper face side, including the side face and the step part, of the electricity storage device. The anode terminal plate having a pair of flanges on the opposing side edges may be mounted on the upper face side of the electricity storage device such that the flanges are joined to the step part. Thereafter, the anode terminal plate may be connected to the anode lead, and a mold-releasing agent having been applied on the cathode terminal plate and the anode lead may be removed to form the resin exterior casing while electricity conductivity is secured. The flange may have a U-shaped cross section.

The chip-type electricity storage component may be obtained in the following manner. The anode-side step part and the cathode-side step part at the bottom of the electricity storage component, each having a prescribed depth, are respectively formed on the anode side and the cathode side. The cathode terminal plate formed in the L shape is mounted on an area from the cathode-side side face to the cathode-side step part of the electricity storage device. Thereafter, the mold-releasing agent is applied on the cathode terminal plate, and the electricity storage device is immersed into the resin solution. The electricity storage device is taken out of the resin solution and the solution is then dried to form the resin exterior casing on the peripheral face of the electricity storage device including the anode-side step part. Subsequently, the anode terminal plate bent in the L-shape is mounted on an area from the anode-side side face to the anode-side step part, and the anode terminal plate is provided to obtain the electricity storage component. In addition, an insulating resin impregnated part where an insulating resin is impregnated in the anode may be formed in the vicinity of the end face of the anode body on the anode external electrode layer side, and the chip-type electricity storage component may be configured such that the anode and the anode external electrode layer are electrically connected to each other in a region of the impregnated resin part formed.

The electricity storage component using the electricity storage device of the present invention may be configured in the following manner. The anode pulling part is provided on the whole of the electrode in the electricity storage device, and as this anode pulling part, a bending part and a connecting part are provided in an extended part of a part provided with a resist film for masking. Further, a comb terminal may be separately connected to the connecting part provided with the cathode conductor layer and the anode pulling part. Moreover, the lead wire for anode used for the electricity storage device using the electricity storage device of the present invention may be an anode lead wire with part of the edge line on the pulling face side formed in the R shape.

In a case where the exterior is formed using a resin in the electricity storage device of the present invention, a damp-proof coating member may be applied on the surface of the exterior resin. Further, a liquid-repellent resin such as a water-repellent resin can be applied on each part constituting the electricity storage component of the present invention, each part constituting the electricity storage component of the present invention to the extent that humidity of the solid electrolyte and the electrodes are not inhibited. A protecting layer made of an insulting material and the like may be formed at the root of the lead, to prevent short-circuit phenomenon or corrosion.

In addition, in the case of using an electricity storage device laminate formed by laminating a plurality of electricity storage devices, the laminate may be configured so as to have the cathode layer on one side face of the outer package member and the anode layer on the other side face thereof.

In addition, in the electricity storage device, the corner part of the metal electrode can be sufficiently covered with the conductive polymer layer to enable prevention of short circuit.

Moreover, an electrode layer may be formed which was made multi-layered by further forming a carbon layer on the metal electrode of the electricity storage device and applying a silver paste on the carbon layer.

**In the electricity storage component, a current collecting** plate may further be provided. The current collecting plate may be formed of platinum, conductive rubber such as a conductive butyl rubber, or formed by thermal spraying of metal such as aluminum or nickel. The current collecting plate may be provided with a metal mesh on one face of the electrode layer.

As for the electricity storage component, when the laminated electricity storage component is to be assembled, cells in number according to required withstand voltage can be laminated alternately with gaskets or spacers of Teflon (registered trademark) and the laminate is sandwiched between end plates for cramping so that a sealing structure can be formed. In addition, at this time, each of the end plates is separated into a cramp plate and a current collecting plate, and a flexibility sheet is sandwiched between the cramping plates and the current collecting plates, the upper and lower cramping plates are cramped with a bolt and the current collecting plates and the electricity storage device are pressed from above and below via a flexibility sheet for sealing.

Since immersion into a solution is easily performed in the electricity storage of the present invention, at least one concave part on at least one face of the electrode such that the concave part does not reach other electrodes.

In addition, in a case where the electricity storage component is formed in the winding shape, the electricity storage device is housed in a case made of metal such as aluminum or a case made of a synthetic resin, to have a sealing configuration. For example, the electricity storage device is housed in a bottomed cylindrical exterior case made or aluminum or the like and a space between the exterior case and the electricity storage device is filled with a resin which has hygroscopicity at the time of curing, to form a resin layer on at least the peripheral face of the electricity storage device. It is to be noted that, when a non-aqueous organic solvent is used as the electrolyte in the electricity storage device, a remnant air amount is preferably less than 5% in the above-mentioned sealing structure. Further, in the electricity storage component, the use of a sealing agent obtained by combination of a hard member and an elastic member can prevent mechanical stress to be applied to the lead wire from being transmitted inside so as to prevent moisture from coming inside.

A thin part may be provided at the main part of the metal case such that an insulating sleeve captures ions in an electrolyte when spread from an opening when created in the thin part. The electricity storage device may be housed and filled with the electrolytic solution, and the insulating sleeve may cover and adhere to the metal case.

In addition, the oxidation film can be formed on the lead in the electricity storage component. A water-repellent resin or the like can be formed in the bonded part of the lead to allow prevention of adherence of the solid electrolyte to the lead. An epoxy resin or the like can be formed at the root part of the bonded lead and the lead root part can be enforced so as not to receive stress for suppressing occurrence of defect in the oxidation film, thereby allowing reduction in current leakage failure.

The electricity storage component may have a known configuration, and may be provided with an insulating gasket as appropriate. Further, known aging can be performed by application of a predetermined voltage at a predetermined temperature after sealing.

The electricity storage component may comprise a plurality of plus terminal groups in which the top of each of aluminum lead frames formed in comb shape is beat.

In the electricity storage of the present invention, an electricity storage device sheet obtained by forming the electrode in grid shape on the solid electrolyte is cut along each square of the grid to obtain the electricity storage device, and for forming the electricity storage device, the electrode of the obtained electricity storage device may be bonded to the electrode lead terminal.

The electricity storage device of the present invention may contain a surfactant in a solution contained in the solid electrolyte for improving wettability and impregnancy.

In the case where the electricity storage device of the present invention is housed inside the insulating container, in order to greatly diminish mechanical vibration and swinging which are transmitted to the electricity storage device, a cushion member represented by a gel insulating material and an elastic material may fill a gap between the electricity storage devices or a gap between the electricity storage device and the insulating container.

### (Size of electricity storage device)

The electricity storage device of the present invention can have a known size, for example size of 7.3 mm × 4.3 mm × 2.0 mm. For example, the electricity storage device may be typically not shorter than 10 mm, and preferably not shorter than 20 mm and 25 to 50 mm in height, and may also be typically not shorter than 10 mm, and preferably not shorter than 20 mm and 25 to 50 mm in width. In addition, the electricity storage device of the present invention may be a cylindrical storage component with a case having a size of 10 mmφ × 16 mmL, φ8×5L, 4φ×7L, 5φ×2.8L, 5φ×3L or the like.

### EXAMPLE

In the following, an example and a comparative example of the present invention are shown, but the present invention is not restricted to those examples.

### (Example of production of electrode-electrolyte structure)

A membrane polymer electrolyte (fluoroplastic ion exchange resin: perfluorocarbonic acid resin, brand name "Flemion", manufactured by Asahi Glass CO., Ltd., ion exchange capacity of 1.8 meq/g) having a film thickness of 160 µm at the time of drying was into methanol as a swelling solvent at 20°C for 30 minutes or longer. The thickness of the swollen membrane polymer electrolyte was measured and a ratio (swelling ratio(%)) at which the film thickness has increased after the swelling with respect to the film thickness in a dried state was calculated, and the membrane polymer electrolyte was immersed into the swelling solvent such that the swelling ratio was 50%. Subsequently, the following cycle of steps (1) to (3) was performed six times on the swollen polymer electrolyte, to obtain the polymer electrolyte with a pair of polarizable electrodes as the metal electrodes formed therein. (1) Absorbing step: the swollen polymer electrolyte was immersed in a dichlorophenanthroline gold chloride aqueous solution for 12 houses to adsorb dichlorophenanthroline gold complex to the molded article. (2) Reducing step: the adsorbed dichlorophenanthroline gold complex was reduced in an aqueous solution containing sodium sulfite, to form a gold electrode on the surface of the membrane polymer electrolyte. At this time, the temperature of the aqueous solution was 60 to 80°C, and dichlorophenanthroline gold complex was reduced for six hours while sodium sulfite was added by degrees. (3) Cleaning step: the membrane polymer electrolyte with the gold electrode formed on the surface was taken out and cleaned with water at 70°C four one hour.

### (Example 1)

The electrode-electrolyte structure obtained in the above-mentioned production example was immersed into 0.5mol/L of a bis(trifluoromethyl)sulfonyl imide lithium (Li(CF₃SO₂)₂N) aqueous solution for 12 hours, and the electrode-electrolyte structure was subjected to vacuum drying for 120 minutes. The dried electrode-electrolyte structure was immersed into 1.0 mol/L of a propylene carbonate solution of bis(trifluoromethyl)sulfonyl imide lithium (Li(CF₃SO₂)₂N) for 12 hours. Voltage was applied to each of the pair of polarizable electrodes of the electrode-electrolyte structures containing the propylene carbonate solution for 12 hours such that the negative electrode voltage was -5.0V, and thereby the electricity storage device of Example 1 was obtained. In the obtained electricity storage device, the negative electrode was discolored black, and an alloy of lithium and gold was provided at the electrode-polymer electrolyte interface. Further, ion species contained in the electricity storage device of Example 1 were (CF₃SO₂)₂N⁻ and LI⁺.

### (Comparative Example 1)

The electrode-electrolyte structure obtained by the above production example was immersed into ion exchange water for 12 hours, and thereafter the electrode-electrolyte structure was vacuum-dried for 120 minutes. A 1.0 mol/L HNO₃ aqueous solution was used for the immersion. Voltage was applied to each of the pair of polarizable electrodes of the electrode-electrolyte structures containing the HNO₃ aqueous solution for 12 hours such that the negative electrode voltage was -5.0V, and thereby the electricity storage device of Comparative Example 1 was obtained. The ion species contained in the electricity storage device of Comparative Example 1 were H⁺ and NO₃-. The electricity storage device of Comparative Example 1 was an electric double-layered capacitor.

### (Comparative Example 2)

The electrode-electrolyte structure obtained by the above production example was immersed into a 0.5 mol/L (C₂H₅)₄NBF₄ aqueous solution for 12 hours, and thereafter the electrode-electrolyte structure was vacuum-dried for 120 minutes. A 1.0 mol/L (C₂H₅)₄NBF₄ propylene carbonate solution was used for the immersion. Voltage was applied to each of the pair of polarizable electrodes of the electrode-electrolyte structures containing the (C₂H₅)₄NBF₄ propylene carbonate solution for 12 hours such that the negative electrode voltage was -5.0V, and thereby the electricity storage device of Comparative Example 2 was obtained. The ion species contained in the electricity storage device of Comparative Example 2 were (C₂H₅)₄N⁻ and BF₄⁺. The electricity storage device of Comparative Example 2 was an electric double-layered capacitor.

**[Table 1]**

| | | Example 1 | Comparative Example 1 | Comparative Example 2 |
|---|---|---|---|---|
| Polymer electrolyte | Ion species | Li⁺,(CF₃SO₂)₂N⁻ | H⁺, NO₃- | BF₄⁺,(C₂H₅)₄N⁻ |
| | Solvent | PC | Water | PC |
| Specific capacity (F/cm³) | | 20 | 10 | 8 |

### (Evaluation)

### (Specific capacity)

With respect to Example 1 and Comparative Examples 1 and 2, measured values obtained by a constant current charging method of the two electrodes are shown in Table 1. The measured value of the specific capacity according to the constant current charging method was a value measured based upon the above-mentioned EIAJ standard No. EIAJ RC-2377, using "HJ-201B" (brand name), manufactured by HOKUTO DENKO Co.,Ltd. It is to be noted that in the case of measuring a capacitance in the above-mentioned manner, the polymer electrolyte as the object to be measured was cut off to make the electricity storage device have a size of 10 mm × 10 mm in a swollen state. In addition, each of the electricity storage devices of Example 1 and Comparative Examples 1 and 2 in a dried state had a thickness of 160 µm. It is to be noted that in the table, "PC" stands for a propylene carbonate.

### (Results)

The electricity storage device of Example 1 as the electricity storage device of the present invention indicated a large specific capacity of 20F/cm³ when measured by the constant current discharging method. At the time of charging, an alloy of gold and lithium as the metal component of each of the polarizable electrodes was formed as a lithium-ion containing layer at the negative electrode interface, and the electric double layer is formed at the positive electrode by (CF₃O₂)₂N⁻. It is therefore considered that a value, obtained by addition of pseudo-capacity that occurs through the redox reaction and the electric double-layer capacity that occurs due to the electric double layers, is the specific capacity. The electricity storage device of Example 1 is considered to function as a hybrid capacitor having characteristics of both the electric double-layered capacitor and the hybrid capacitor.

As opposed to this, each of the electricity storage devices of Comparative Examples 1 and 2 does not contain lithium ions. Hence application of voltage to the polarizable electrodes did not cause a change in formation of the alloy or the like at the interface of the negative electrode and the polymer electrolyte. Therefore, at the time of charging, only the electric double layers are formed at the positive electrode and the negative electrode, and unlike the electricity storage device of Example 1, a reversible oxidation-reduction reaction as in a secondary battery structure does not follow. Thereby, each of the specific capacitances of Comparative Examples 1 and 2 is a capacity obtained by the electric double-layer capacity, which is a very small value, not more than a half of the capacity of the electricity storage device of Example 1.

### INDUSTRIAL APPLICABILITY

The electricity storage device of the present invention has a larger capacity and a higher charge density than those of the conventional capacitor. Therefore, in the application of a known electric double-layered capacitor, the electricity storage device of the present invention can be suitably used since an attempt can be made for reduction in space and/or size and weight. In particular, since the electricity storage device of the present invention is a small-sized and light-weight device, the device can be suitably used as the electricity storage device for a power source of a potable mechanical instrument and a power source of a stationary power source with a large capacity. In particular, the electricity storage device can be suitably used as a power source for driving a next-generation low-emission vehicle, a power source of auto mobile electrical components, a storage power source and/or an auxiliary power source of natural energy power generation, a power source of a medical device capable of implantation, a power source for memory back up of a mobile electric device, a power source of a mobile clock, a charger for a quick charger, a power source of a digital camera, an electric toy, and a power source of mobile home electric appliances. Concrete applications are more specifically described below.

The electricity storage device of the present invention is suitably used as a power source of a mobile mechanical device since having characteristics of small size and light weight. In addition, when a power source with a large capacity is required, the electricity storage device of the present invention is suitably used as a stationary power source with a large capacity since being capable of reducing a footprint. Particularly suitably used can be a power source or an auxiliary power source for automobiles and motorbikes as next-generation low emission vehicles including an HEV, an electric automobile and a hybrid automobile which use the electricity storage device of the present invention, a power source of a super power type power module for an electric automobile or the like, a power source of information communication devices, which typically is a mobile phone, a paper battery for an identification card or the like, a solar power generation energy storage system in combination with a solar cell, and a load leveling power source in combination with a battery. In particular, the electricity storage device of the present invention can be suitably used as a capacitor for an electric automobile comprising a fuel cell, a capacitor, and a current output type switching regulator. Moreover, since the electricity storage device of the present invention is lightweight, a power source of automobile electrical components such as a car audio using the electricity storage device of the present invention is capable of improving fuel consumption of a vehicle. Further, a storage power source and/or auxiliary power source of natural energy generation, which are typically a solar power generation system, a wind power energy generation system, a wind power-solar hybrid power generation system, and a wave power generation system, are suitably used as a small footprint power source having a large capacity. Since the electricity storage device of the present invention is lightweight, an implantable medical device using the electricity storage device does not put a large burden on a human body in terms of weight, and can thus be suitably used. Since the electricity storage device of the present invention is lightweight, the following power sources are excellent in portability: power sources/power sources for memory backup of mobile electric devices which typically include a mobile personal computer, a cell phone, a timer and a clock function for a power, a power source/auxiliary power source of a video camera, a power source/power source for coping with electric power failure of a mobile terminal, a personal computer, especially a laptop, which use the electricity storage device of the present invention, a power source for a mobile clock using the electricity storage device of the present invention, a power source circuit of a personal computer excellent in life, temperature characteristic and high frequency characteristic, a charger for quick charge using the electricity storage device of the present invention, a power source of a digital camera using the electricity storage device of the present invention, a power source of an electric toy using the electricity storage device of the present invention, and a power source of mobile home electric appliances using the electricity storage device of the present invention, which are typically an electric shaver and an electric pot.

Since having a small size and a large capacity, the electricity storage device of the present invention can be used in an application other than the applications of the known electric double-layered capacitor. Specifically, since having a small size and a large capacity, the electricity storage device of the present invention can be suitably used as a power source or an auxiliary source of a non-blackout power source device, an outdoor installation device such as a house electricity storage system, a power source circuit of an automobile electric installation device linked in parallel between the battery and the DC-CD converter, a flyback transformer used for a cathode ray tube for use in a switching regulator, a motor control regulator, a computer electronics, a television receiver and the like, electric devices such as an audio amplifier, a serge protector, and a resistance spot welder, cogeneration equipment, home power generation device, an X-ray image pickup panel, a high-voltage phase advancing capacitor (capacitor for use in electric power facilities, an oil-impregnated paper film capacitor), a distractive device for destroying an object to be destroyed such as a base rock, an escape device at the time of submersion of a vehicle under water, an X-ray image pick-up device arranged to obtain an X-ray image (latent image) as an image signal, a battery-free watch, a display device using a display panel, a liquid crystal display device, a matrix liquid crystal display device cathode ray tube for use particularly in a projector or the like, a disposable camera, a resonant label pasted on a commercial product or the like for being theftproof, a flash or a stroboscopic device, and an emission indicator.

In particular, since having a large capacity, the electricity storage device of the present invention can be suitably used as a source of big power built in home electric appliances, machine tool or an electric automobile; a storage device of facilities for electricity reception/transformation, or facilities for power distribution, and an auxiliary electricity storage unit for a energy conversion/storage system. The electricity storage device of the present invention can also be used as a high-pressure application by lamination of the devices.

Since having a small size and a large capacity, the electricity storage device of the present invention can be suitably used for a control module for use in an electric rolling stock driving device and an inverter device, especially a small sized water-cool control module having a high cooling efficiency. In addition, with the above-mentioned properties, the electricity storage device of the present invention can be suitably used for an acceleration sensor unit, a gas sensor for measuring an exhaustion gas and an inflammable gas, and a gas concentration controller. Further, the electricity storage device of the present invention is also suitably used as a heating resistor type air flow rate measurement device in the form of three-terminal electrochemical device.

Since having a small size and a large capacity and low equivalent series resistance, the electricity storage device of the present invention can be suitably used for a semiconductor package with the electricity storage component mounted on the top layer thereof as a chip component, and a print circuit board with the electricity storage device incorporated thereinto. In the print circuit board with the electricity storage device incorporated thereinto, a print wiring board where the electricity storage device has been mounted on the surface thereof or imbedded thereinto is preferred for reduction in size and cost and improvement in function of an electric device for which the print wiring board is used. Therefore, since having a small size, a large capacity and low equivalent series resistance, the electricity storage device of the present invention can be suitably used for a memory device, especially a DRAM (dynamic random access memory), an MMIC (monolithic microwave integrated circuit), and a nonvolatile ferroelectric memory. Further, since having a small size, a large capacity and low equivalent series resistance, the electricity storage device is suitably used for the electricity storage device, a circuit board with a built-in LCR, a filter circuit such as a noise filter, a ferroelectric memory, a perovskite ferroelectric substance, a thin semiconductor such as an IC (integrated circuit) card, an FeRAM using the ferroelectric substance, a light emitting element array of an organic EL element, IC chips of the IC card or the like, a semiconductor having a ferroelectric, and a switching element for switching electric power.

The electricity storage device of the present invention is applicable to the field requiring an EDR value for power source flatness of electric/ electronic equipment or for noise removal, at high frequency. Further, since the electricity storage device has the function of inhibiting a high frequency as a noise element generated by a converter or an inverter, it is also suitable as a noise filter. Accordingly, since the electricity storage device is easy to decrease in size and has a large capacity and a low equivalent series resistance, the device to be used can be reduced in size and used for a noise filter. The device can thus be suitably used as a plasma potential measurement device, and can further be suitably used as a tactile sensor by being provided along with an LC series resonant circuit. Moreover, with the above-mentioned characteristics, the electricity storage device of the present invention can also be suitably used for a photo voltage sensor for measuring voltage utilizing an electro-optic effect (Pockels effect), an optical conversion-type measuring instrument transformer, high frequency radio equipment, an impedance matching device suitably performed in association with an impedance matching antenna, a directional antenna and the like in high frequency equipment where a frequency of a signal to be handled in a satellite broadcasting receiver, wireless LAN and the like, is about equal to 400 MHz to 20 GHz (UHF to SHF band), a filter component used for mobile communication equipment such as a cell phone, and a tuner for television signal reception.

Further since the electricity storage device of the present invention can be practically integrated with a housing, a box, an undercarriage, chassis, vehicle body, a divider, a cover or a casing in home appliances, devices, facilities, measuring equipment, automobiles including an electric automobile or motorbikes, by bonding the electrode layer to a bendable metal plate to connect the metal electrode, or direct bonding using a silver paste. Since the electricity storage device has a small size, a large capacity, and is excellent in reduction in footprint, the housing, box, chassis, divider, cover and casing, having been practically integrated with the electricity storage device of the present invention, can be used for an undercarriage, chassis, or a vehicle body of an electric automobile, an electric bicycle, an electric wheel chair, an electric caster walker, an electric scooter, an electric running machine, or an electric golf car, a package case of a laptop, a perm type personal computer, a mobile phone or an electric tools, or a street-lamp pole for generating power using solar energy.

In addition, other than the use of the electricity storage device of the present invention as a power source, the electricity storage device of the present invention may be used in a water supply from a raw water generated in an electric power plant or the like, a semiconductor production process, in production of pure water used for a fuel cell power generation, production and circulating use of gas cooler water, and a demineralizer used for collecting each kind of discharged water. The use of the electricity storage device allows removal of each species of ion from raw water and also removal of silica to give demineralized water or pure water. Moreover, even when an origin or properties of raw water are changed, the device can serve as a demineralization device capable of dealing with such change without changing the pre-processing to produce demineralized water or pure water having stable water property, so as to stably produce secondary pure water (ultra pure water).

The electricity storage device of the present invention can be used as an electrochemical device applicable to display. More specifically, a photoemission element array in active matrix where unit picture elements comprising the electricity storage device are arrayed in matrix form is formed, which comprises: a substrate; a pair of comb-shaped electrodes provided on the substrate; a light emission layer which is provided in contact with the comb-shaped electrodes and contains a luminescent substance and an electrolyte; a transistor for current control; and a unit picture element comprising the electricity storage device. The electricity storage device of the present invention can be applied by being used for display.

## Claims

1. An electricity storage device, comprising a polymer electrolyte and polarizable electrodes,
the polarizable electrodes each comprising an interface with the polymer electrolyte,
the polarizable electrodes being metal electrodes,
a negative electrode of the polarizable electrodes having, at its interface with the polymer electrolyte, a lithium alloy with a metal component contained in the negative electrode,
the lithium alloy being capable of releasing lithium ions through a reversible electrochemical oxidation-reduction reaction.

2. The electricity storage device according to claim 1, wherein the metal electrode as the negative electrode is a metal electrode whose components include one or more metals selected from the group consisting of gold, lead, tin and zinc.

3. The electricity storage device according to claim 1, wherein the metal electrode as the negative electrode is a gold electrode.

4. The electricity storage device according to claim 1, wherein a positive electrode is composed of the same metal elements as the metal components of the metal electrode as the negative electrode.

5. The electricity storage device according to claim 1, wherein the lithium alloy is a lithium alloy which occurs by application of minus voltage to the metal electrode in a non-aqueous solution containing lithium ions.

6. The electricity storage device according to claim 1, wherein the polymer electrolyte is an ion exchange resin.

7. The electricity storage device according to claim 1, wherein the electricity storage device is an electrode assembly.

8. The electricity storage device according to claim 1, wherein a specific capacity of the electricity storage device is not less than 20F/cm³.

9. A method for producing an electricity storage device, comprising:
a structure forming step of obtaining an electrode-electrolyte structure where each of the polarizable electrodes is formed on a polymer electrolyte through an electroless plating method; and
a layer forming step of applying voltage to the polarizable electrode while the electrode-electrolyte structure obtained by the structure forming step includes a solution containing lithium ions, to form a layer containing lithium and a metal component of the polarizable electrodes at the negative electrode of the polarizable electrodes.

10. The method for producing an electricity storage device according to claim 9, wherein the solution containing lithium ions is contained into the polymer electrolyte of the electrode-electrolyte structure as a pre-step of the structure forming step, or concurrently with the layer forming step.

11. The method for producing an electricity storage device according to claim 9, wherein
the polymer electrolyte is an ion exchange resin membrane, and
the electroless plating method is a method including: an adsorbing step of making the ion exchange resin adsorb a metal complex; and a reducing step of bringing a reductant solution into contact with the ion exchange resin, to which the metal complex was adsorbed by the adsorbing step, to deposit a metal.

12. The method for producing an electricity storage device according to claim 9, wherein the metal complex contains one or more metals selected from the group consisting of gold, lead, tin and zinc.

13. An electricity storage device, comprising a polymer electrolyte and polarizable electrodes, and obtained by forming an electrode-electrolyte structure where each of the polarizable electrodes is formed on a polymer electrolyte through an electroless plating method; and
then applying voltage to the polarizable electrodes while the electrode-electrolyte structure includes a solution containing lithium ions, to form a layer with a metal component of the polarizable electrodes bonded to lithium, at the negative electrode of the polarizable electrodes.

14. The electricity storage device according to claim 13, wherein
the polymer electrolyte is an ion exchange resin membrane, and
the electroless plating method is a method including: an adsorbing step of making the ion exchange resin adsorb a metal complex; and a reducing step of bringing a reductant solution into contact with the ion exchange resin, to which the metal complex was adsorbed by the adsorbing step, to deposit a metal.

15. The electricity storage device according to claim 13, wherein the metal component contains one or more metals selected from the group consisting of gold, lead, tin and zinc.
